# EUROPÄISCHE PATENTANMELDUNG

(11) **EP 1 013 755 A2**
(43) Veröffentlichungstag der Anmeldung: **28.06.2000**
(21) Anmeldenummer: 99124889.9
(22) Anmeldetag: 17.12.1999
(51) Int. Cl.: C12H 1/06, C12G 3/00

(54) **Verfahren zur Behandlung von alkoholischen Getränken durch Ultraschall**

(30) Priorität: 22.12.1998 DE 19859558
(71) Anmelder: ECKES AG, D-55268 Nieder-Olm (DE)
(72) Erfinder: Mann, Erwin, Dr., 55543 Bad Kreuznach (DE); Grawitz, Karl, 55268 Nieder-Olm (DE)
(74) Vertreter: Lederer, Franz, Dr.

(57) **Zusammenfassung**

Die Erfindung betrifft ein Verfahren zur Behandlung von alkoholischen Getränken und insbesondere zur Verhinderung der Nachtrübung von Spirituosen, wobei die eine Nachtrübung verursachenden Bestandteile durch eine Ultraschallbehandlung ausgeschieden und anschließend abgetrennt werden, ohne daß das sensorische Profil der mit diesem Verfahren hergestellten Produkte nachteilig beeinflußt wird.

## Beschreibung

Die vorliegende Erfindung betrifft ein Verfahren zur Behandlung von alkoholischen Getränken und insbesondere zur Verhinderung der Nachtrübung von Spirituosen sowie die nach diesem Verfahren erhaltenen Produkte.

Die zu den alkoholischen Getränken zählenden Spirituosen gelten definitionsgemäß als für den menschlichen Genuß bestimmte, alkoholische Flüssigkeiten mit besonderen organoleptischen Eigenschaften, die durch Gärung und nachfolgende Destillation aus landwirtschaftlichen Rohstoffen gewonnen werden und einen Alkoholgehalt von mindestens 15% vol aufweisen (Ausnahme: Eierlikör mit 14% vol). Wichtiges Qualitätsmerkmal ist ihr Gehalt an flüchtigen Aromastoffen, die bei der Destillation mit dem Alkohol in das Destillat übergeführt werden. Derzeit sind etwa 300-500 verschiedene flüchtige Substanzen bekannt, von denen die meisten in sehr geringen Mengen vorliegen. Die Bedeutung der einzelnen Komponenten für das Geschmacksprofil des Fertigproduktes war und ist ebenso Gegenstand intensiver Untersuchungen wie die möglichst vollständige Aufklärung aller Komponenten, die zum charakteristischen Geruch und Geschmack der verschiedenen Spirituosen beitragen.

Spirituosen sind nach traditioneller Verbrauchererwartung klare Flüssigkeiten, die bei Obst- und Getreidebränden in der Regel farblos, bei Whisky, Cognac und Weinbrand in der Regel goldgelb bis goldbraun sind. Eine Ausnahme bilden die Liköre, die neben einer typischen Farbe oft auch eine Trübung aufweisen.

Häufig treten jedoch bei der Zugabe von Wasser zur Verdünnung der hochprozentigen Destillate (Alkoholgehalt 60-95% vol) auf Trinkstärke (Alkoholgehalt 30-45% vol) durch Änderung der Löslichkeitseigenschaften vieler Inhaltsstoffe unerwünschte Trübungen auf. Vor der Abfüllung der Produkte in Flaschen oder sonstige Behältnisse wird daher in der Regel eine Filtration vorgenommen, um diese Trübungsstoffe und eventuelle sonstige Verunreinigungen zu entfernen. Die Behandlung soll darüber hinaus späteren Nachtrübungen vorbeugen, die insbesondere während des Transports und der Lagerung bei niedrigen Temperaturen auftreten können und gleichzeitig gewährleisten, daß die wertbestimmenden Aroma- und Bukettstoffe möglichst vollständig erhalten bleiben.

Zu den die Trübungen verursachenden unerwünschten Komponenten gehören u.a. Härtebildner wie Calcium- und Magnesiumionen, Metallsalze, Fuselöle, etherische Öle und Wachse (Jung O. und Graf H.: Filtration von Obstbränden, Kleinbrennerei 1/1995, 4-7). Trübungen sind häufig nicht auf das alleinige Auftreten eines Parameters zurückzuführen, sondern werden durch das Zusammenwirken mehrerer Faktoren wesentlich beschleunigt. Als Hauptverursacher der Trübungen wurden die Ethylester der höheren Fettsäuren, insbesondere der Decan-, Dodecan-, Tetradecan- und Hexadecansäure identifiziert (Senn, Th.: Klar und voller Geschmack; Der Einfluß der Filtration auf das Aroma von Spirituosen, Getränkeindustrie 4/98, 220-226). Zur Gewährleistung trübungsstabiler Spirituosen wird daher für den Gehalt an C₆- bis C₁₆-Fettsäureethylestern ein oberer Grenzwert von 20 bis 25 mg/l Spirituose vorgeschlagen.

Der Gehalt an C₆- bis C₁₆-Fettsäureethylestern und der angestrebte Alkoholgehalt sind für die sogenannte Kältestabilität, d.h. die Stabilität bei niedrigen Temperaturen entscheidend. Da die Löslichkeit dieser Fettsäureethylester durch niedrige Temperaturen wesentlich herabgesetzt wird und hierdurch resultierende Trübungen daher bei niedrigen Temperaturen leichter abgeschieden werden, ist es üblich, die Produkte einer Kältebehandlung zu unterziehen. Dadurch soll einerseits eine möglichst vollständige Abtrennung erreicht und andererseits sollen spätere Nachtrübungen während des Transports oder der Lagerung der Fertigprodukte vermieden werden. Nach der Kältebehandlung muß die Spirituose möglichst kalt filtriert werden, und es ist darauf zu achten, daß während der gesamten Dauer der Kältebehandlung und der nachfolgenden Filtration keine wesentliche Erwärmung stattfindet.

In der Regel werden Temperaturen unter 0°C angewandt (Pieper H.J. et al.: Technologie der Obstbrennerei, Verlag Eugen Ulmer, 1977, S. 315 und 322). Um einen weitgehenden Kläreffekt zu erzielen, kann nach Pieper et al. die Zeit der Kühllagerung um so kürzer bemessen werden, je tiefer die Kühltemperatur liegt. Als Faustregel wird bei Temperaturen von 4°C eine Lagerzeit von mindestens 14 Tagen, bei -10°C von drei bis vier Tagen empfohlen.

Auch zur Herstellung lagerstabiler Whiskys wird seit den 60er Jahren verstärkt die Kaltfiltration angewandt, wobei die Wirkung der Temperatur auf die Aromazusammensetzung beachtet werden muß. Eine Filtration im Temperaturbereich von 3 bis 7°C ergibt normalerweise eine gute Trübungsstabilität und der Einfluß auf die vorhandenen Aromastoffe ist zu vernachlässigen.

Im Bereich von -5 bis 0°C wird eine sehr gute Stabilität erzielt, einhergehend mit einer spürbaren Aromaveränderung. Bei Temperaturen von -10 bis -5°C wird zwar ein optimaler Schutz gegen Nachtrübungen bewirkt, die Aromaveränderungen können allerdings signifikant sein (Brewing & Distilling International, August 1981, 20-21, 31).

Auch Untersuchungen an Obstbränden bei unterschiedlichen Temperaturen und mit verschiedenen Filtersystemen ergaben, daß durch moderate Kühlung der Destillate bereits eine Verbesserung der Trübungsstabilität von Williamsbränden erzielt wird. Eine zunehmende Kühlung zur weiteren Verbesserung der Trübungsstabilität führte jedoch zu deutlichen Aromaverlusten (Senn, Th. a.a.O.)

Die JP 61289876 beschreibt ein Verfahren zur selektiven Entfernung von öligen Substanzen aus bestimmten Spirituosen mit Hilfe von Polypropylenfasern. Dabei werden die öligen Substanzen, die u.a. verantwortlich für Trübungen nach Verdünnen des alkoholischen Getränkes mit Wasser sind, von den Polypropylenfasern adsorbiert.

Die Anwendung von Ultraschall bei der Herstellung alkoholischer Getränke ist ebenfalls schon länger bekannt. Beispielsweise berichtete Specht W. schon 1950 über die Alterung und Veredelung von Spirituosen durch Ultraschall (Die Alkohol-Industrie, Nr. 5, 1950, 87-89). Die DD 119 614 beschreibt ein Verfahren zur Schnellreifung von Spirituosen durch Ultraschallbehandlung der Destillate bei Anwendung geschmacksverbessernder Zusätze, vorzugsweise Eichenholz.

Die EP-A-0 336 262 beschreibt ein Verfahren zur beschleunigten Herstellung von Spirituosen mit verbessertem Aroma und hoher Lagerfähigkeit. Das Verfahren beruht auf einer Ultraschallbehandlung des frisch bereiteten alkoholischen Getränks mit einer Frequenz von 8-14 kHz bei einer Amplitude von 0,5-10 µm.

In zahlreichen weiteren Veröffentlichungen wird über die Anwendung von Ultraschall bei der Weinherstellung berichtet. Die Angaben über eine damit zu erzielende Wertverbesserung sind allerdings widersprüchlich. In Modellösungen und in Wein konnte jedoch durch eine Behandlung mit Ultraschall die Kristallisationsgeschwindigkeit von Weinstein erhöht werden. Als deren Folge ergab sich eine bedeutende Verkürzung der vor der Filtration zur Abscheidung von Weinstein notwendigen Kühlzeit (Haushofer, H. und Szemeliker, L.: Die Förderung der Weinsteinausscheidung bei Weinen durch Zugabe von Impfkristallen, Kratzen an Glaswänden und Anwendung von Ultraschall, Mitteilungen Rebe und Wein, 1973, 259-284).

Die bekannten Verfahren zur Verhinderung der Nachtrübung von Spirituosen mittels Kältebehandlung und Kaltfiltration weisen den Nachteil auf, daß sie durch die Notwendigkeit der Kältebehandlung vor der Filtration und auch der Filtration in der Kälte kosten- und zeitaufwendig sind, da große Flüssigkeitsmengen gekühlt, gelagert und in der Kälte filtriert werden müssen. Darüber hinaus besteht das Risiko von unerwünschten Veränderungen des sensorischen Profils der so stabilisierten Produkte.

Eine Aufgabe der vorliegenden Erfindung besteht somit darin, ein Verfahren zur Verfügung zu stellen, das die Nachtrübung von Spirituosen auch bei niedrigen Lagertemperaturen über einen möglichst langen Zeitraum verhindert, ohne die oben genannten Nachteile aufzuweisen. Insbesondere soll das Verfahren einen im Vergleich zur Kältebehandlung und Kaltfiltration geringeren Kosten- und Zeitaufwand erfordern, ohne das sensorische Profil der nach diesem Verfahren hergestellten Produkte nachteilig zu beeinflussen.

Es wurde nun überraschend gefunden, daß sich die Nachtrübung von Spirituosen durch eine Ultraschallbehandlung mit anschließender Abtrennung der ausgeschiedenen Bestandteile verhindern läßt.

Die vorliegende Erfindung betrifft somit ein Verfahren, zur Verhinderung der Nachtrübung von Spirituosen, dadurch gekennzeichnet, daß man die Spirituosen einer Ultraschallbehandlung unterzieht und die bei der Ultraschallbehandlung ausgeschiedenen Bestandteile abtrennt.

Die Ultraschallbehandlung wird erfindungsgemäß bevorzugt mit einer Frequenz von 15-100 kHz, vorzugsweise von 20-40 kHz und insbesondere von 25-35 kHz durchgeführt.

Die erfindungsgemäße Ultraschallbehandlung kann mit einer Leistung von 0,5-10 Watt/Liter Spirituosen, vorzugsweise von 1-5 Watt/Liter Spirituosen durchgeführt werden. Die Dauer der Ultraschallbehandlung sollte so gewählt sein, daß die zur Nachtrübung führenden Stoffe ausgeschieden werden. Hierzu hat sich eine Behandlungsdauer von 15-300 Minuten bewährt.

Als besonders vorteilhaft erweist sich, daß die Ultraschallbehandlung des erfindungsgemäßen Verfahrens bei Normaltemperatur durchgeführt werden kann. Unter Normaltemperatur wird vorliegend Raumtemperatur wie beispielsweise ca. 20°C verstanden.

Die Ultraschallbehandlung bewirkt ein Ausscheiden von Bestandteilen, die für die Nachtrübung von Spirituosen verantwortlich sind. Es kommt zu einer Zusammenflockung dieser unerwünschten Stoffe, die sich beispielsweise ausfällen oder als Oberflächenfilm abscheiden können. Zu diesen Stoffen zählen neben den als Leitsubstanzen erfaßten Ethylestern der höheren Fettsäuren beispielsweise höhere Alkane, freie höhere Fettsäuren, Fette, Steroide wie Sitosterol und andere.

Die im ersten Schritt des erfindungsgemäßen Verfahrens durch die Ultraschallbehandlung ausgeschiedenen Bestandteile werden anschließend in einem zweiten Schritt abgetrennt. Bevorzugt erfolgt diese Abtrennung der Ausscheidungen durch Filtration.

Es hat sich als vorteilhaft erwiesen, wenn die Filtration mit einer Abscheiderate von < 0,5 µm durchgeführt wird. D.h. der Filter sollte Teilchen mit einer Größe von ≥ 0,5 µm zurückhalten.

Ein weiterer Vorteil der vorliegenden Erfindung besteht darin, daß neben der Ultraschallbehandlung auch die Abtrennung der Ausscheidungen bei Normaltemperatur, d.h. Raumtemperatur wie ca. 20°C, durchgeführt werden kann. Insbesondere wird eine Filtration bei Normaltemperatur bevorzugt, so daß es zweckmäßig ist, die Spirituosen zwischen der Ultraschallbehandlung und der Abtrennung der Ausscheidungen auf etwa Normaltemperatur zurückzukühlen, da sich die Spirituosen während der Ultraschallbehandlung leicht erwärmen. Hierdurch kann beispielsweise ein Verlust an leicht flüchtigen Bestandteilen während der Abtrennung der Ausscheidungen vermieden werden. Die Kühlung kann z.B. durch Berieselung des Behandlungsbehälters, den Einsatz von Doppelmanteltanks, Kühlschlangen oder durch einen Wärmeaustauscher vorgenommen werden.

Zur Abtrennung der bei der Ultraschallbehandlung ausgeschiedenen Bestandteile können verschiedene Filtersysteme wie z.B. Schichtenfilter, Kerzenfilter oder Membranfilter verwendet werden.

Das erfindungsgemäße Verfahren kann sowohl chargenweise diskontinuierlich als auch kontinuierlich durchgeführt werden. Das erfindungsgemäße Verfahren eignet sich insbesondere zur Stabilisierung von blanken Spirituosen, wobei vorliegend unter Spirituosen alkoholische Getränke mit einem Alkoholgehalt von insbesondere mindestens 15% vol, vorzugsweise von mindestens 25% vol und besonders bevorzugt von mindestens 30% vol verstanden werden. Beispielsweise kann es sich um Spirituosen handeln, die ausgewählt sind aus Weinbrand, Cognac, Whisky, Obstbränden wie z.B. Williams Birnenbrand, Tresterbränden, Grappa, Getreidebränden und Kräuterlikören, wobei Weinbrand und Cognac bevorzugt sind.

Es hat sich gezeigt, daß durch die Verwendung von Ultraschall beispielsweise C₆- bis C₁₈-Fettsäureethylester und insbesondere C₁₆- bis C₁₈-Fettsäureethylester aus Spirituosen ausgeschieden werden. Die mit dem erfindungsgemäßen Verfahren behandelten Spirituosen weisen daher einen verringerten Gehalt an diesen Fettsäureethylestern auf.

Die nach dem erfindungsgemäßen Verfahren behandelten und somit gegen eine Nachtrübung stabilen Spirituosen sind insbesondere dadurch gekennzeichnet, daß das Verhältnis der Summe der Gehalte an C₁₆- bis C₁₈-Fettsäureethylestern, ausgedrückt in mg/100 ml reiner Alkohol, zur Summe der Gehalte an C₆- bis C₁₄-Fettsäureethylestern, ausgedrückt in mg/100 ml reiner Alkohol, kleiner etwa 0,2 und vorzugsweise kleiner etwa 0,125 ist.

Die Summe der Gehalte an C₁₆- bis C₁₈-Fettsäureethylestern setzt sich dabei bevorzugt aus den Gehalten an Hexadecansäureethylester, 9-Hexadecensäureethylester, Octadecansäureethylester, Z-9-Octadecensäureethylester, Z,Z-9,12-Octadecadiensäureethylester und Z,Z,Z-9,12,15-Octadecatriensäureethylester zusammen. Die Summe der Gehalte an C₆- bis C₁₄-Fettsäureethylestern setzt sich bevorzugt aus den Gehalten an Hexansäureethylester, Octansäureethylester, Decansäureethylester, Dodecansäureethylester und Tetradecansäureethylester zusammen.

Das erfindungsgemäße Verfahren weist den Vorteil auf, daß durch die Ultraschallbehandlung bei Raumtemperatur die kosten- und zeitaufwendige Kältebehandlung vor und während der Filtration vermieden wird. Ein weiterer Vorteil besteht darin, daß die wertbestimmenden Komponenten erhalten bleiben und daß sich das sensorische Profil der erfindungsgemäß behandelten Spirituosen im Vergleich zu unbehandelten oder auf herkömmliche Weise stabilisierten Produkten durch eine besondere Harmonie und Vollmundigkeit auszeichnet.

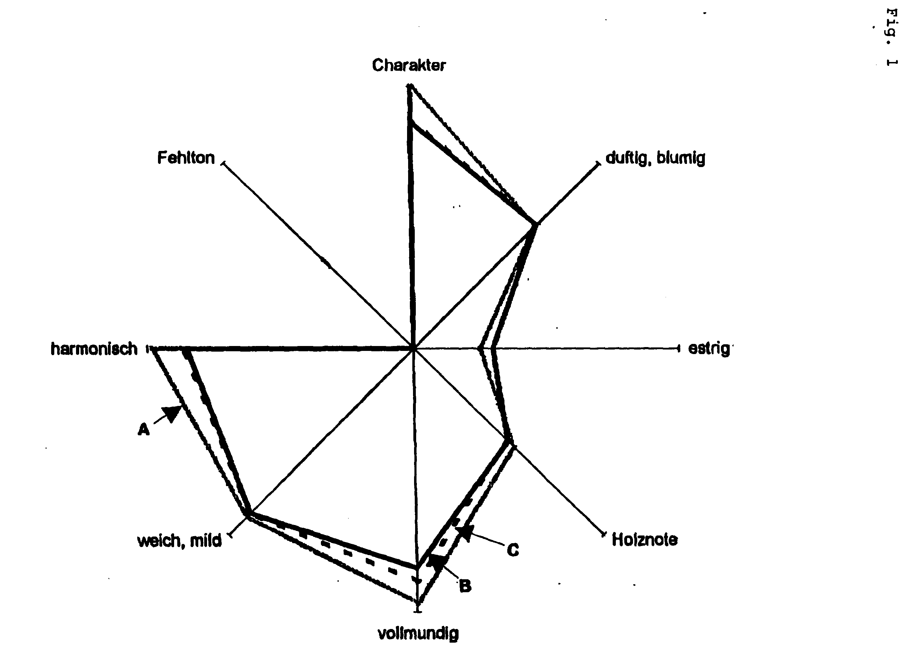

Figur 1 zeigt das Ergebnis einer sensorischen Prüfung nach der Profilmethode, wobei A das Ergebnis für einen erfindungsgemäß behandelten Weinbrand, B das Ergebnis für einen kältestabilisierten Weinbrand und C das Ergebnis für einen nicht stabilisierten Weinbrand darstellt.

Die nachfolgenden Beispiele sollen die Erfindung näher erläutern:

### Beispiel 1

Zur erfindungsgemäßen Stabilisierung von 1.000 l Weinbrand mit einem Alkoholgehalt von 38,1% vol wurden ein leistungsvariabler Ultraschall-Generator und ein Sechskant-Tauchschwinger aus Edelstahl mit einer Leistung von max. 2 kW bei einer Frequenz von 30 kHz eingesetzt. Die Behandlung wurde bei einer Produkttemperatur von ca. 20°C in einem mit einer Temperatur-und Drucküberwachungseinrichtung versehenen 1.000 l Edelstahltank mit Domverschluß durchgeführt. Nach Befüllung des Tanks erfolgte die Ultraschallbehandlung, die über einen Zeitraum von zwei Stunden vorgenommen wurde. Im Anschluß an die Beschallung wurde der Tankmantel durch Überströmen mit Wasser über eine Dauer von 30 Minuten auf die Ausgangstemperatur von ca. 20°C zurückgekühlt.

Danach wurde das Produkt mit einer Abscheiderate von 0,45 µm bei einer Temperatur von ca. 20°C und einem Druck von 0,5-1 bar filtriert, im Anschluß in 0,7 l-Flaschen abgefüllt und als Weinbrand "A" bezeichnet.

### Beispiel 2 (Vergleichversuch)

In einem zweiten Versuch wurde die Stabilisierung des in Beispiel 1 verwendeten Weinbrandes nach der herkömmlichen Methode der Kältebehandlung vorgenommen. Zu diesem Zweck wurde ein mit 1.000 l Weinbrand befüllter Tank im Kühlhaus zunächst auf -18°C gekühlt, danach wurde der Weinbrand über einen Zeitraum von 10 Tagen bei einer Temperatur von ca. -10°C gehalten. Im Anschluß wurde der kalte Weinbrand wie in Beispiel 1 beschrieben mit einer Abscheiderate von 0,45 µm filtriert, in 0,7 l-Flaschen abgefüllt und als Weinbrand "B" gekennzeichnet.

### Beispiel 3 (Vergleichsversuch)

In einem weiteren Vergleichsversuch wurde der in Beispiel 1 verwendete Weinbrand, der eine Temperatur von ca. 20°C aufwies, ohne weitere Vorbehandlung wie in den Beispielen 1 und 2 beschrieben filtriert und mit der Bezeichnung Weinbrand "C" in 0,7 l-Flaschen abgefüllt.

Im Anschluß wurde eine vergleichende Prüfung der Trübungsstabilität und des sensorischen Profils der mit "A", "B" und "C" bezeichneten Weinbrände durchgeführt.

### Stabilitätstest

Bereits in vorangegangenen Versuchen war festgestellt worden, daß die Durchführung der Tests bei +4°C schon nach etwa 4 Wochen Lagerdauer eine sichere Aussage über die spätere Trübungsstabilität erlaubt, da sich Nachtrübungen bei dieser Temperatur offensichtlich besonders deutlich manifestieren. Die in den Beispielen 1 bis 3 beschriebenen Weinbrände "A", "B" und "C" wurden daher bei diesen Bedingungen gelagert und in regelmäßigen Abständen unter Zuhilfenahme eines Partikel-Prüfgerätes optisch geprüft.

Dabei zeigte sich, daß der erfindungsgemäß behandelte Weinbrand "A" ebenso wie der nach der herkömmlichen Methode der Kältestabilisierung behandelte Weinbrand "B" im Verlauf der Lagerung keine Ausflockungen oder Ausscheidungen aufwies, während sich im unbehandelten Weinbrand "C" bereits nach kurzer Zeit deutliche Flocken und Ausscheidungen zeigten.

### Prüfung des sensorischen Profils

Der Test wurde mit einer speziellen Methode der beschreibenden sensorischen Prüfungen, der sogenannten Profilmethode durchgeführt (vgl. R. Neumann, P. Molnár: Sensorische Lebensmitteluntersuchung, Fachbuchverlag Leipzig, 1991, 161). Das Ziel der Profilmethode besteht im allgemeinen darin, den Geschmack des zu analysierenden Produktes in seiner Komplexität mit allen Komponenten einschließlich der haptischen Empfindungen, die bei der Mundprobe wahrnehmbar sind, darzustellen. Die Profilmethode wurde im Laufe der Jahre zu einer wissenschaftlichen Methode der sensorischen Analytik weiterentwickelt und für die Entwicklung bzw. Vervollkommnung und für die tiefgehende sensorische Analyse verschiedener Lebensmittel angewendet.

Mit der sensorischen Profilmethode werden alle wahrnehmbaren Geruchs- und Geschmackskomponenten sowie die Komponenten der Textur in der zeitlichen Reihenfolge ihrer Wahrnehmung beschrieben. Gleichzeitig wird die Intensität jeder Komponente nach einer festgelegten und von den Prüfpersonen eingeprägten Intensitätsskala bestimmt, wobei die Aussagekraft durch die Gegenüberstellung der profilanalytischen und der meßtechnischanalytischen Parameter noch erhöht werden kann.

Die sensorische Prüfung wurde von 10 geschulten Verkostern durchgeführt. Aus der Vielzahl der von den 10 Verkostern gemeinsam erarbeiteten Begriffe wurde für die Weinbrände A, B und C aus der Häufigkeit der ermittelten Komponenten bzw. Parameter das nachstehende qualitative Grundprofil erstellt.

### Weinbrand A, B, C

Charakter
duftig, blumig
estrig
Holznote
vollmundig
weich, mild
harmonisch
Fehlton

Für die Quantifizierung dieser Parameter wurde eine Intensitätsskala von 0-6 verwendet. Das Ergebnis der sensorischen Prüfung ist in Fig. 1 dargestellt. Die Darstellung zeigt, daß der nach dem Verfahren der vorliegenden Erfindung behandelte Weinbrand A gegenüber dem kältestabilisierten Weinbrand B und einem nicht stabilisierten Weinbrand C insgesamt in seinem Charakter, seiner Vollmundigkeit und Harmonie eine höhere Bewertung erhielt, während bei den übrigen Parametern keine signifikanten Unterschiede festgestellt wurden.

Die profilanalytisch ermittelte Bevorzugung der nach dem Verfahren der vorliegenden Erfindung behandelten Spirituosen wurde durch die meßtechnisch ermittelten Analysendaten bestätigt.

## Patentansprüche

1. Verfahren zur Verhinderung der Nachtrübung von Spirituosen, dadurch gekennzeichnet, daß man die Spirituosen einer Ultraschallbehandlung unterzieht und die bei der Ultraschallbehandlung ausgeschiedenen Bestandteile abtrennt.

2. Verfahren nach Anspruch 1, dadurch gekennzeichnet, daß die Ultraschallbehandlung mit einer Frequenz von 15-100 kHz, vorzugsweise 20-40 kHz durchgeführt wird.

3. Verfahren nach einem der vorhergehenden Ansprüche, dadurch gekennzeichnet, daß die Ultraschallbehandlung mit einer Leistung von 0,5-10 Watt/Liter Spirituosen, vorzugsweise 1-5 Watt/Liter Spirituosen, durchgeführt wird.

4. Verfahren nach einem der vorhergehenden Ansprüche, dadurch gekennzeichnet, daß die Ultraschallbehandlung für eine Dauer von 15-300 Minuten durchgeführt wird.

5. Verfahren nach einem der vorhergehenden Ansprüche, dadurch gekennzeichnet, daß die Ultraschallbehandlung und die Abtrennung der ausgeschiedenen Bestandteile bei etwa Normaltemperatur durchgeführt werden.

6. Verfahren nach einem der vorhergehenden Ansprüche, dadurch gekennzeichnet, daß das Abtrennen der ausgeschiedenen Bestandteile durch Filtration erfolgt.

7. Verfahren nach Anspruch 6, dadurch gekennzeichnet, daß die Filtration mit einer Abscheiderate von kleiner 0,5 µm durchgeführt wird.

8. Verfahren nach einem der vorhergehenden Ansprüche, dadurch gekennzeichnet, daß die Spirituosen zwischen der Ultraschallbehandlung und der Abtrennung der ausgeschiedenen Bestandteile auf etwa Normaltemperatur zurückgekühlt werden.

9. Verfahren nach einem der vorhergehenden Ansprüche, dadurch gekennzeichnet, daß die Spirituosen einen Alkoholgehalt von mindestens 25% vol, vorzugsweise mindestens 30% vol aufweisen.

10. Verfahren nach einem der vorhergehenden Ansprüche, dadurch gekennzeichnet, daß die Spirituosen ausgewählt sind aus Weinbrand, Cognac, Whisky, Obstbränden, Tresterbränden, Grappa, Getreidebränden und Kräuterlikören.

11. Verwendung von Ultraschall zur Ausscheidung von C₆-bis C₁₈-Fettsäureethylestern aus Spirituosen.

12. Gegen Nachtrübung stabile Spirituose, dadurch gekennzeichnet, daß in der Spirituose das Verhältnis der Summe der Gehalte an C₁₆- bis C₁₈-Fettsäureethylestern, ausgedrückt in mg/100 ml reiner Alkohol, zur Summe der Gehalte an C₆- bis C₁₄-Fettsäureethylestern, ausgedrückt in mg/100 ml reiner Alkohol, kleiner etwa 0,2 ist.
